## Europäisches Patentamt
## European Patent Office
## Office européen des brevets

(19)

(11) Veröffentlichungsnummer: **0 002 462**
**A1**

(12) **EUROPÄISCHE PATENTANMELDUNG**

(21) Anmeldenummer: **78101462.6**

(22) Anmeldetag: **27.11.78**

(51) Int. Cl.²: **B 23 D 61/18**
**B 28 D 5/02**

(30) Priorität: 25.11.77 DE 2752643
28.03.78 DE 2813346

(43) Veröffentlichungstag der Anmeldung:
27.06.79 Patentblatt 79/13

(84) Benannte Vertragsstaaten:
BE CH FR GB LU NL SE

(71) Anmelder: Jakob Lach Diamantwerkzeug-Fabrik
Bruchköbeler Landstrasse 39
D-6450 Hanau/Main(DE)

(72) Erfinder: Lach, Horst
Bruchköbeler Landstrasse 41
D-6450 Hanau/Main(DE)

(74) Vertreter: Strasse, Joachim, Dipl.-Ing. et al,
Römerstrasse 19 Postfach 793
D-6450 Hanau/Main(DE)

(54) Trennvorrichtung mit Sägezähnen.

(57) Um beim Trennen von Materialien den Anteil an feinem Staub herabzusetzen und gleichzeitig die Standfestigkeit von Trennvorrichtungen (10) mit Sägezähnen, von denen ein Teil der Sägezähne (16) über die anderen Sägezähne (12) vorsteht, zu erhöhen, sind ein Teil der vorstehenden Sägezähne (16) durch Diamantplättchen (20) gebildet. Dabei stehen die vorstehenden Sägezähne (16) vorzugseise entsprechend der Dicke der Diamantplättchen (20) über die anderen Sägezähne (12) hervor.

EP 0 002 462 A1

·/· · ·

Fig. 2

- 1 -

Trennvorrichtung mit Sägezähnen

Die vorliegende Erfindung bezieht sich auf eine
Trennvorrichtung mit Sägezähnen mit an der Schneidseite angeordneten Hartmetallplättchen, wobei ein
Teil der Sägezähne über die anderen Sägezähne vorsteht.

Derartige Trennvorrichtungen, die zum Beispiel in Form
einer kreisförmigen Trennscheibe ausgebildet sein
können, zeigen eine kurze Standfestigkeit, d.h., daß
ihre Einsatzzeit relativ kurz ist. Zudem entsteht
beim Schneidvorgang ein sehr hoher Anteil von feinem
Staub. Dieser feine Staub kann durch die üblichen
Absaugvorrichtungen nicht vollständig abgesaugt werden.
Neben der dadurch bedingten Verunreinigung des Arbeitsplatzes tritt jedoch ein schwerwiegender Nachteil auf,
der darin besteht, daß dieser feine Staub zwangsweise
durch den Benutzer eingeatmet wird und zu großen
gesundheitlichen Schädigungen, insbesondere der Atmungswege, wie der Lunge, führen kann. Besonders schädlich
ist der Staub beim Feinschneiden von glasfaserverstärkten Epoxydharzen. Die feinen Glasfaserteilchen
führen zu schwersten Schädigungen der Lunge.

Es ist nun Aufgabe der vorliegenden Erfindung, eine
Trennvorrichtung der eingangs erwähnten Art so weiterzuentwickeln, daß der Anteil des feinen Staubs verringert und gleichzeitig die Standfestigkeit der
Trennvorrichtung erhöht wird.

Die Aufgabe wird erfindungsgemäß dadurch gelöst,
daß bei den über die anderen Sägezähne vorstehenden

0002462

- 2 -

Sägezähnen ein Teil der Sägezahnbrust und z ndest ein Teil des Sägezahnrückens durch Diamantplättchen ausgebildet ist. Vorzugsweise kann jeder 4. bis 7. Sägezahn die anderen überragen.

Durch die Ausbildung zumindest eines Teils der hervorstehenden Sägezähne in Form von Diamant- plättchen kann der Anteil an feinem Staub in erstaunlichem Umfang verringert werden. Dies läßt sich möglicherweise dadurch erklären, daß durch die vorstehenden Zähne zunächst ein Grobschnitt erfolgt, bei dem lediglich grobe "Späne" abfallen. Die im Anschluß an diesen Grobschnitt mit der Schnittfläche in Eingriff kommenden anderen Sägezähne bewirken dann ledig- lich noch den Feinschnitt, damit eine feine, saubere Schnittfläche erzielt wird. Bei diesem Feinschnitt fällt jedoch relativ wenig Staub an. Durch die Diamant- plättchen wird außerdem die Lebensdauer der vorstehenden Sägezähne, die einem höheren Abrieb ausgesetzt sind, erhöht, so daß die Standfestigkeit insgesamt zunimmt. Vorzugsweise stehen die vorstehenden Sägezähne entsprechend der Dicke des Diamantplättchens über die anderen Sägezähne hervor. Um das Diamantplättchen auf einem Sägezahn aufzubringen, wird ein Teil Hartmetall- platte durch eine Hartmetallunterlage für das Diamant- plättchen ersetzt. Vorteilhafterweise kann zudem das Diamantplättchen in Schneidrichtung über die Zahnbrust hervorspringen.

- 3 -

Weitere Ausgestaltungen der Erfindung ergeben sich
aus den Unteransprüchen.

Weitere Einzelheiten, Vorteile und Merkmale der
Erfindung ergeben sich aus der Beschreibung der
Zeichnung.

Es zeigen:

Fig. 1    eine Draufsicht einer kreisförmigen
          Trennscheibe im Ausschnitt und

Fig. 2    einen vergrößerten Ausschnitt der Sägezahnanordnung nach Fig. 1.

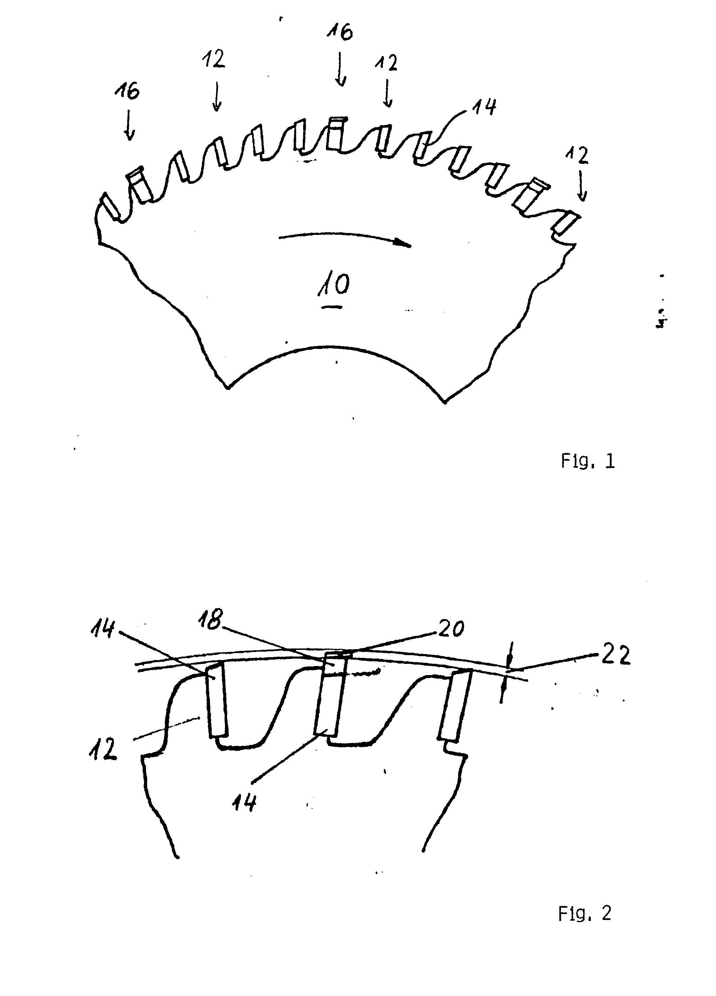

In Fig. 1 ist im Ausschnitt eine Trennscheibe 10
mit Sägezähnen 12 dargestellt. Die Sägezähne 12
weisen an ihrer Brustfläche Hartmetallplättchen 14
auf. In der Trennscheibe nach Fig. 1 weist jeder
6. Sägezahn 16 einen Vorsprung gegenüber den übrigen
Sägezähnen 12 auf. Doch kann verständlicherweise auch
zum Beispiel der 7. oder 8. Sägezahn mit einem solchen
Vorsprung versehen sein.

Der Vorsprung der Sägezähne 16 wird dadurch erzielt,
daß das Hartmetallplättchen 14 in seinem oberen Bereich
18 durch eine Hartmetallunterlage für ein vorzugsweise
quaderförmiges Diamantplättchen 20 ersetzt wird. Die
Hartmetallunterlage 18 entspricht in etwa in seinen
Ausmaßen dem Teil, der von dem Hartmetallplättchen 14
entfernt ist. Die Sägezähne 16 mit den Diamantplättchen

- 4 -

20 stehen nun über die anderen Sägezähne in etwa um das Maß hervor, das der Dicke 22 der Diamantplättchen 20 entspricht. Wie den Figuren 1 und 2 zu entnehmen ist, ragt das Diamantplättchen in Schneidrichtung über die Brustfläche hervor, die von dem Hartmetallplättchen und der Hartmetallunterlage 18 für das Diamantplättchen gebildet wird.

Es ist ersichtlich, daß die erfindungsgemäße Trennvorrichtung nicht nur für Trennscheiben, sondern auch für Bandsägen ihre Verwendung finden kann. Im übrigen ist ein universeller Einsatz der erfindungsgemäßen Trennvorrichtung möglich, da es praktisch überall auf einen möglichst geringen Staubanteil bei einem Schneidvorgang ankommt. Besonders wichtig ist jedoch ein geringer Staubanteil in der Halbleitertechnik, da es dort nicht nur auf die Gesundheitsschädigung aufgrund des Staubanfalls ankommt, sondern auch auf die Funktionsfähigkeit der Mikrobauteile.

BAD ORIGINAL

Patentansprüche:

1. Trennvorrichtung mit Sägezähnen mit an der Schnittseite angeordneten Hartmetallplättchen, wobei ein Teil der Sägezähne über die anderen Sägezähne vorsteht, dadurch gekennzeichnet, daß bei den über die anderen Sägezähne (12) vorstehenden Sägezähnen (16) ein Teil der Sägezahnbrust und zumindest ein Teil des Sägezahnrückens durch Diamantplättchen (20) ausgebildet ist.

2. Trennvorrichtung nach Anspruch 1, dadurch gekennzeichnet, daß die vorstehenden Sägezähne (16) entsprechend der Dicke der Diamantplättchen (20) über die anderen Sägezähne (12) vor- stehen.

3. Trennvorrichtung nach Anspruch 1 und/oder Anspruch 2, dadurch gekennzeichnet, daß das Diamantplättchen (20) auf einer Hartmetallunterlage (18) befestigt ist, die in das Hartmetallplättchen (14) der vorstehenden Sägezähne (16) eingelassen ist.

4. Trennvorrichtung nach zumindest einem der Ansprüche 1 bis 3, dadurch gekennzeichnet, daß die vordere Kante der Diamantplättchen (20) über die aus den Schnittflächen der

BAD ORIGINAL

- 2 -

Hartmetallplättchen (14) und der Hartmetallunterlage (18) für das Diamantplättchen (20) gebildeten Sägezahnbrustflächen in Richtung der Schneidrichtung
hervorragen.

5. Trennvorrichtung nach zumindest Anspruch 1,
dadurch gekennzeichnet,
daß das Diamantplättchen (20) vorzugsweise
quaderförmig ist.

6. Trennvorrichtung nach zumindest Anspruch 1,
dadurch gekennzeichnet,
daß das Diamantplättchen (20) synthetischer
Diamant ist.

0002462

Fig. 1

Fig. 2

Nummer der Anmeldung

EP 78 10 1462

# EUROPÄISCHER RECHERCHENBERICHT

**Europäisches Patentamt**

| | EINSCHLÄGIGE DOKUMENTE | | | KLASSIFIKATION DER ANMELDUNG (Int. Cl.) |
|---|---|---|---|---|
| Kategorie | Kennzeichnung des Dokuments mit Angabe, soweit erforderlich, der maßgeblichen Teile | | betrifft Anspruch | B 23 D 61/18<br>B 28 D 5/02 |
| A | <u>US − A − 3 133 533</u> (SPRAGUE)<br>* Spalte 2, Zeilen 1-32; Figuren * | | 1 | |
| | −− | | | |
| A | <u>CH − A − 446 859</u> (NAEPFLIN)<br>* Spalte 2, Zeile 38 bis Spalte 3, Zeile 19; Figuren * | | 1 | |
| | −− | | | |
| A | <u>US − A − 2 127 112</u> (GIBBS)<br>* Seite 1, rechte Spalte, Zeilen 7-32; Figuren * | | 1 | RECHERCHIERTE SACHGEBIETE (Int. Cl.)<br><br>B 23 D<br>B 28 D<br>B 27 B |
| | −−−− | | | |

**KATEGORIE DER GENANNTEN DOKUMENTE**

X von besonderer Bedeutung

A technologischer Hintergrund

O nichtschriftliche Offenbarung

P Zwischenliteratur

T der Erfindung zugrunde liegende Theorien oder Grundsätze

E kollidierende Anmeldung

D in der Anmeldung angeführtes Dokument

L aus andern Gründen angeführtes Dokument

& Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 01-03-1979 | HORVATH |